# EUROPEAN PATENT APPLICATION

(11) **EP 0 684 535 A1**
(43) Date of publication of application: **29.11.1995**
(21) Application number: 95201270.6
(22) Date of filing: 16.05.1995
(51) Int. Cl.: G05D 23/13, F16K 11/10

(54) **Thermostatic mixer tap**

(30) Priority: 20.05.1994 DE 4417736; 09.12.1994 DE 4443960
(71) Applicant: Danfoss A/S, DK-6430 Nordborg (DK)
(72) Inventor: Borg, Krister, S-595 32 Mjölby (SE)

(57) **Abstract**

A thermostatic mixer tap having inlet connections (8, 9) for cold and hot water has a mixed water outlet (16) and a thermostatic mixing valve device (4) between the inlet connections (8, 9) on the one hand and the mixed water outlets (16, 18) on the other. In order to increase the speed with which a container connected to the mixed water outlet (18) fills up whilst maintaining the set temperature, the thermostatic mixing valve device (4) comprises a first and a second thermostatic mixing valve unit (2, 3), which are connected on the input side to the inlet connections (8, 9) and on the output side to a valve arrangement (V), and the outlets (15, 17) of the first and second mixing valve units (2, 3) are together connectable, or only the outlet (15) of the first mixing valve unit (2) is connectable, to the second mixed water outlet (18) via the valve arrangement (V).

## Description

The invention relates to a thermostatic mixer tap having inlet connections for cold and hot water, a first mixed water outlet and a thermostatic mixing valve device between the inlet connections and the mixed water outlet.

In a commercially available thermostatic mixer tap of that kind, the thermostatic mixing valve device comprises a single thermostatic mixing valve unit, the mixed water outlet of which can be connected, selectively, to one or the other of two mixed water outlets of the thermostatic mixer tap by means of a changeover valve, one mixed water outlet serving to fill a bathtub and the other for attachment of a shower head. The maximum flow to the shower head is limited to 12 litres/minute at three bar and the maximum flow to the tub is limited to 20 litres/minute. Although the flow to the tub can be adjusted to be greater than the flow to the shower head, the time taken for the tub to fill up is often felt by the user to be too long. Thus, for example, in wash rooms for the disabled, a tilting bathtub is used in which the patient first stands in the tub in its upright position. The tub, together with the patient, is then tilted to a horizontal position and the water is run in. It is an unpleasant experience for the patient if the bathtub takes a long time to fill, as he may well get cold. Rapid setting of the maximum flow may initially result in a water temperature that is too low and is considerably lower than the set desired value.

The problem underlying the invention is to provide a thermostatic mixer tap of the type mentioned at the outset, which enables flow to be set over a greater range and especially enables a bathtub to be filled more rapidly whilst maintaining the set temperature.

That problem is solved according to the invention in that the thermostatic mixing valve device comprises a first and a second thermostatic mixing valve unit, which are connected on the input side to the inlet connections and on the output side to a valve arrangement, and the outlets of the first and second mixing valve units are together connectable, or only the output of the first mixing valve unit is connectable, to the second mixed water outlet via the valve arrangement.

In this manner, the flow of both mixing valve units can be fed together via the valve arrangement or, selectively, only the flow of one or the other mixing valve unit, in part, where appropriate, can be fed via the mixing valve arrangement, to the first mixed water outlet. If the maximum flow of both mixing valve units is fed to the first mixed water outlet, in that way it is possible, for example, to fill a bathtub at greater speed than is possible with only one mixing valve unit of the same capacity as that of one of the two mixing valve units. Too great a drop in the water temperature is, however, avoided since the heating capacities of both mixing valve units are jointly effective in that case.

If required, one of the mixing units may be set manually instead of thermostatically.

Preferably, the valve arrangement is provided with a first and a second stop valve, the first stop valve is arranged between the output of the first mixing valve unit and the first mixed water outlet and the second stop valve is arranged between the output of the second mixing valve unit and the second mixed water outlet, the valve arrangement comprises a third valve arranged between the input of the first stop valve and the input of the second stop valve, and the flow through the connection between the input of the first stop valve and the input of the second stop valve can be closed off in at least one direction by means of the third valve.

If the shower head is connected to the mixed water outlet, in the direction of which the flow through the connection between the inputs of the stop valves can be closed off by means of the third valve, then, when the third valve is in the opened state and the (first) stop valve before the mixed water outlet leading to the shower head is closed, the mixed water emerging from both mixing valve units can be fed to the mixed water outlet for the tub. This enables an increase in the speed with which the bathtub fills up to a speed many times the previous filling speed and enables a correspondingly shorter filling time. On the other hand, when the third valve is in the closed state, the shower can be operated as before, that is to say, with a maximum flow of 12 litres/minute at 3 bar. A greater flow would result in an unfavourable mix of cold and hot water and unnecessarily high water consumption.

Alternatively, the valve arrangement between the outputs of the first and second mixing valve units can be provided with a non-return valve, which opens in the direction of the output of the second mixing valve unit, and a distributing valve having two inputs and two outputs, by means of which in a first setting there exists a through connection from the output of the first mixing valve unit to the first mixed water outlet, in a second setting there exists a through connection from the outputs of the mixing valve units to the mixed water outlets, in a third setting there exists a through connection from the output of the second mixing valve unit to the second mixed water outlet and in a fourth setting there is no through connection from the outputs of the mixing valve units to the mixed water outlets. In that construction, instead of the two stop valves, a single distributing valve suffices which serves to create or close off all of the through connections, whether it be to the first mixed water outlet for the tub or to the second mixed water outlet for the shower head.

Another construction of the solution according to claim 1 can consist in providing the valve arrangement with a distributing valve having two inputs and one output, which valve is connected on the input side to the outputs of the mixing valve units and on the output side to only one mixed water outlet of the mixing valve device, and by means of which in a first setting there exists a through connection from the output of the first mixing valve unit to the mixed water outlet, in a second setting there exists a through connection from the outputs of the mixing valve units to the mixed water outlet, in a third setting there exists a through connection from the output of the second mixing valve unit to the mixed water outlet and in a fourth setting there is no through connection to the mixed water outlet. Here too, a single, although somewhat simpler, distributing valve suffices for the connection of one or the other mixing valve unit or of both mixing valve units to the first (single) mixed water outlet of the mixer tap, in which case a third valve may be omitted.

If the third valve is provided, it may be a non-return valve, a stop valve or a 3 port 3 way valve that can be manually or automatically operated. That valve enables selective or automatic closing or opening of the connection between the output of the first mixing valve unit and the output of the second mixing valve unit.

At least one further mixing valve unit can then be directly connected in parallel with the second mixing valve unit and the output of each further mixing valve unit can be connected via its own stop valve respectively to its own mixed water outlet of the mixer tap. In that way, it is possible to increase the filling speed still further through the second mixed water outlet or through the respective mixed water outlet of the further mixing valve unit.

It is especially favourable if the distributing and stop valves comprise ceramic disks, one of which is fixed permanently in position and the other of which, resting against the first, serves as a rotary member, the disks being provided with openings and channels which can be caused to coincide both partially and completely by rotating the rotary member. Such valves have the advantage that they are less likely to leak and have a long service life. Furthermore, changing the setting of the valves results in a constant transition with intermediate values between the minimum and maximum flow.

All the valves are preferably integrated in a housing of the mixer tap. This provides the mixer tap with a compact structure.

The invention and developments thereof are described hereinafter in more detail with reference to drawings of preferred embodiments, in which:
Fig. 1 is a diagrammatic view of a first embodiment of a thermostatic mixer tap according to the invention,
Fig. 2 is a diagrammatic view of a second embodiment of a thermostatic mixer tap according to the invention,
Fig. 3 is a diagrammatic view of a third embodiment of a thermostatic mixer tap according to the invention,
Fig. 3A to 3D show various settings of a distributing valve contained in a valve arrangement of the embodiment according to Fig. 3,
Fig. 4 is a diagrammatic view of a fourth embodiment of a thermostatic mixer tap according to the invention, and
Fig. 4A to 4D show various settings of a distributing valve contained in a valve arrangement of the embodiment according to Fig. 4.

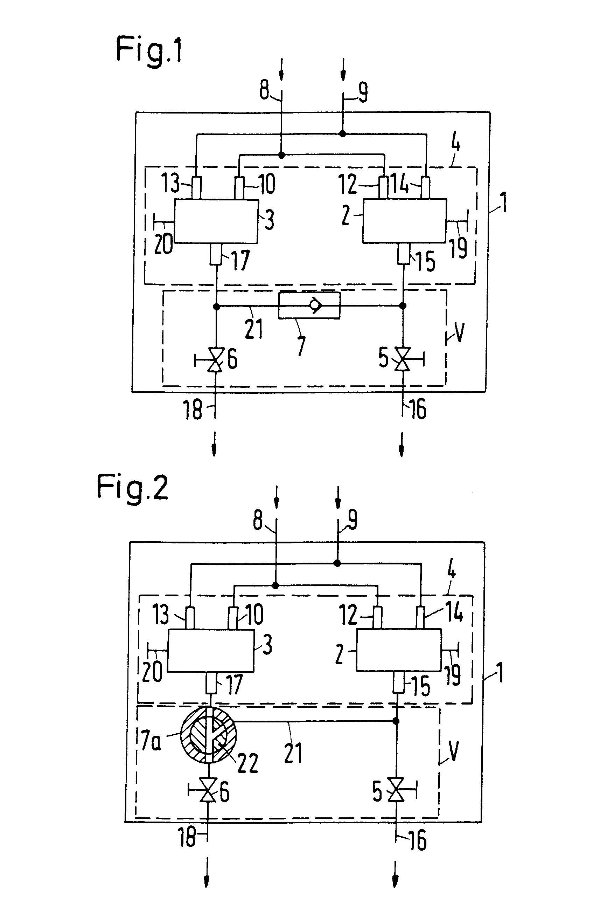

In the embodiment according to Fig. 1, there are integrated in the housing 1 of a thermostatic mixer tap two thermostatic mixing valve units 2 and 3, which together form a thermostatic mixing valve device 4, and a valve arrangement V which comprises a first stop valve 5, a second stop valve 6 and a third valve 7 in the form of a non-return valve. The mixer tap has an inlet connection 8 for cold water and an inlet connection 9 for hot water, each of which is connected respectively to cold water connections 10 and 12 and to hot water connections 13 and 14 of the mixing valve units 2 and 3.

The mixed water outlet 15 of the mixing valve unit 2 is connected via the stop valve 5 to a mixed water outlet 16 leading to a shower head and the mixed water outlet 17 of the mixing valve unit 3 is connected via the stop valve 6 to a mixed water outlet 18 leading to a bathtub. The two stop valves 5 and 6 are connected to one another on their input side by means of the third valve 7 which opens in the direction from the mixed water outlet 15 to the mixed water outlet 18.

Each of the mixing valve units 2 and 3 can be set, independently of the other, to predetermined desired mixed temperature values by means of a respective temperature setting means 19 and 20, and automatically maintains those values. In order to simplify setting, one of the two setting means 19 and 20 can be set permanently and the other can be set as desired. Alternatively, the two setting means 19 and 20 can be coupled to one another and set by means of a common setting means. That reduces the risk of a flow of water that is too hot for the patient. The maximum flows of the two mixing valve units 2 and 3 may be different.

The stop valves 5 and 6 can be set manually.

When the stop valve 6 is open and the stop valve 5 is at least partially or fully closed, the mixed water emerging from the two mixing valve units 2 and 3 flows into the bathtub via the mixed water outlet 18 because the valve 7, in this instance, opens automatically. The bathtub is therefore filled very quickly because the two mixed water outlet flows of the mixing valve units 2 and 3 are combined.

If, however, the stop valve 6 is closed and the stop valve 5 is opened, the valve 7 closes so that mixed water emerges only from the mixing valve unit 2 and flows to the shower head via the stop valve 5 and the mixed water outlet 16. This provides greater ease of mixing with both high water consumption and also low water consumption.

Instead of being a non-return valve, the valve 7 can also be in the form of a manually controllable stop valve, just like the stop valves 5 and 6. In that way, it is also possible to close the connection 21 between the mixed water outlets 15 and 17 and the inputs of the stop valves 5 and 6, in which case, if the valve 7 in the form of a stop valve is open, the stop valve 5 would have to be closed in order to increase the flow through the then-opened stop valve 6 into the bathtub.

The embodiment according to Fig. 2 corresponds, with the exception of the 3 port 3 way valve 7a used instead of the valve 7, to the embodiment according to Fig. 1. When the rotary member 22 of that valve 7a is in the illustrated position, the stop valve 6 being open and the stop valve 5 being closed, that valve 7a, which has three connections and three positions, enables not only a connection from the mixed water outlet 17 to the mixed water outlet 18, but also a connection from the mixed water outlet 15 to the mixed water outlet 18 via the connection 21, the valve 7a and the stop valve 6. In contrast, in the second position of the rotary member 22, rotated through 180 with respect to the illustrated position thereof, a connection between the mixed water outlets 17 and 18 and between the mixed water outlets 15 and 16 is still possible but is not, however, possible between the mixed water outlets 15 and 18. In a third position of the rotary member 22, rotated through 90 with respect to the illustrated position thereof, the valve 7a is, in contrast, closed.

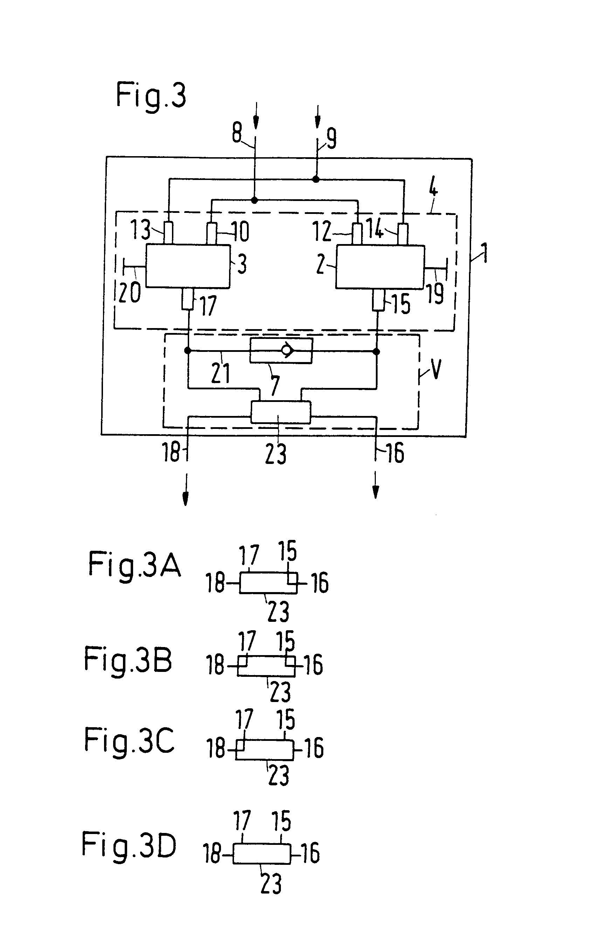

The embodiment according to Fig. 3 likewise corresponds, with the exception of the distributing valve 23 used in the valve arrangement V instead of the stop valves 5 and 6, to the embodiment according to Fig. 1. That distributing valve 23 has two inputs, each of which is connected respectively to one of the outputs 15 and 17 of the two mixing valve units 2 and 3, and two outputs, each of which is connected respectively to one of the mixed water outlets 16 and 18 of the mixer tap.

In a first setting of the distributing valve 23 according to Fig. 3A, there exists a through connection from the output 15 of the mixing valve unit 2 to the mixed water outlet 16. In a second setting shown in Fig. 3B, there exists a through connection from the outputs 15 and 17 to the mixed water outlets 16 and 18. In a third setting of the distributing valve 23 according to Fig. 3C, there exists a through connection from the output 17 of the mixing valve unit 3 to the mixed water outlet 18 and in a fourth setting of the distributing valve 23 according to Fig. 3D, there is no through connection from the outputs 15 and 17 of the mixing valve units to the mixed water outlets 16 and 18, that is to say, in the fourth setting the distributing valve is closed. In that construction, the separate stop valves 5 and 6 according to Fig. 1 and 2 are omitted. In the setting shown in Fig. 3C, there also exists, however, a through connection from the output 15 of the mixing valve unit 2 to the mixed water outlet 18 via the non-return valve 7. In that setting, the flow of both mixing valve units 2 and 3 therefore combines at the mixed water outlet 18 so that a bathtub arranged thereunder can, where appropriate, in that instance also, be filled via the mixed water outlet 18 at a high filling speed.

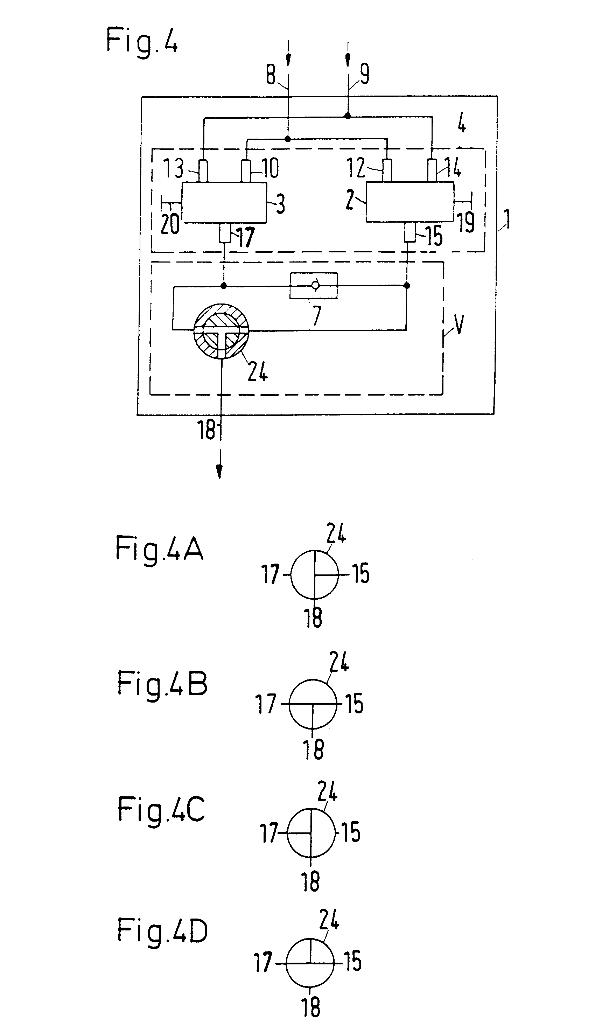

The embodiment according to Fig. 4 differs from the embodiment according to Fig. 3 only in that, instead of the distributing valve 23 having four connections, there is provided in the valve arrangement V a distributing valve 24 that has only three connections, and the first mixed water outlet 16 is omitted. The distributing valve 24 has two inputs and one output. Each of the two inputs is connected respectively to one of the outputs 15 and 17 of the two mixing valve units 2 and 3 and the output is connected to the single mixed water outlet 18. In a first setting of the distributing valve 24 according to Fig. 4A, there exists a through connection from the output 15 of the mixing valve unit 2 to the mixed water outlet 18. In a second setting shown in Fig. 4B, there exists a through connection from the outputs 15 and 17 of the two mixing valve units 2 and 3 to the mixed water outlet 18. In a third setting shown in Fig. 4C, there exists a through connection from the output 17 of the mixing valve unit 3 to the mixed water outlet 18, and in a fourth setting shown in Fig. 4D, there is no through connection to the mixed water outlet 18. The non-return valve 7 may be omitted but is, however, provided for reasons of simplified storage. In that embodiment also, the flow of the two mixing valve units 2 and 3 combines at the mixed water outlet 18 in the setting of the distributing valve 24 shown in Fig. 4 and 4B, and, if the non-return valve 7 is provided, also in the setting shown in Fig. 4C. In contrast, in the setting shown in Fig. 4C without the non-return valve 7, only the output 17 of the mixing valve unit 3 is connected to the mixed water outlet 18 and in the setting shown in Fig. 4A only the output 15 of the mixing valve unit 2 is connected to the mixed water outlet 18. In contrast, in the setting shown in Fig. 4D, no water flows through the mixed water outlet 18.

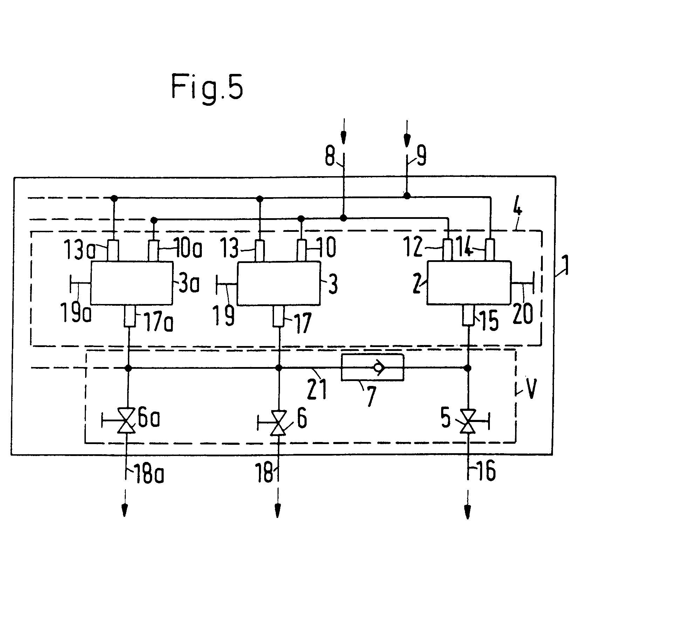

By comparison with the embodiment according to Fig. 1, in the embodiment according to Fig. 5 at least one further mixing valve unit 3a, which may be in the same form as the mixing valve unit 3, is directly connected in parallel with the mixing valve unit 3, and the output 17a of the further mixing valve unit 3a is connected via its own stop valve 6a to its own mixed water outlet 18a of the mixer tap. There may, however, be further mixing valve units connected in parallel with the mixing valve unit 3, each having a further stop valve and its own mixed water outlet.

The stop valves 5 and 6 and the distributing valves 7a, 23 and 24 may comprise ceramic disks, one of which is fixed permanently in position and the other of which, resting against the first, serves as a rotary member, the disks being provided with openings and channels which can be caused to coincide both partially and completely by rotating the rotary member.

Instead of feeding the mixed water emerging from the mixed water outlet 18 into a tub, it is also possible to connect several showers in parallel to the mixed water outlet 18.

A further variation can consist in the stop valves 5 and 6 not being integrated in the housing 1 but being positioned outside the housing 1 in the connection to the shower or tub. Automatic valves, for example electromagnetic valves, can be provided as stop valves if required.

## Claims

1. Thermostatic mixer tap having inlet connections (8, 9) for cold and hot water, a first mixed water outlet (16) and a thermostatic mixing valve device (4) between the inlet connections (8, 9) on the one hand and the mixed water outlet (16) on the other, characterized in that the thermostatic mixing valve device (4) comprises a first and a second thermostatic mixing valve unit (2, 3), which are connected on the input side to the inlet connections (8, 9) and on the output side to a valve arrangement (V), and the outputs (15, 17) of the first and second mixing valve units (2, 3) are together connectable, or only the output (15) of the first mixing valve unit (2) is connectable, to the second mixed water outlet (18) via the valve arrangement (V).

2. Mixer tap according to claim 1, characterized in that the valve arrangement (V) comprises a first and a second stop valve (5, 6), the first stop valve (5) is arranged between the output (15) of the first mixing valve unit (2) and the first mixed water outlet (16) and the second stop valve (6) is arranged between the output (17) of the second mixing valve unit (3) and the second mixed water outlet (18), the valve arrangement comprises a third valve (7; 7a) arranged between the input of the first stop valve (5) and the input of the second stop valve (6), and the flow through the connection (21) between the input of the first stop valve (5) and the input of the second stop valve (6) can be closed off in at least one direction by means of the third valve (7; 7a).

3. Mixer tap according to claim 1, characterized in that the valve arrangement (V) between the outputs (15, 17) of the first and second mixing valve units (2, 3) comprises a non-return valve (7), which opens in the direction of the output (17) of the second mixing valve unit (3), and a distributing valve (23) having two inputs and two outputs, by means of which in a first setting there exists a through connection from the output (15) of the first mixing valve unit (2) to the first mixed water outlet (16), in a second setting there exists a through connection from the outputs (15, 17) of the mixing valve units (2, 3) to the mixed water outlets (16, 18), in a third setting there exists a through connection from the output (17) of the second mixing valve unit (3) to the second mixed water outlet (18) and in a fourth setting there is no through connection from the outputs (15, 17) of the mixing valve units (2, 3) to the mixed water outlets (16, 18).

4. Mixer tap according to claim 1, characterized in that the valve arrangement (V) comprises a distributing valve (24) having two inputs and one output, which valve is connected on the input side to the outputs (15, 17) of the mixing valve units and on the output side to only one mixed water outlet (18) of the mixing valve device (4) and by means of which in a first setting there exists a through connection from the output (15) of the first mixing valve unit (2) to the mixed water outlet (18), in a second setting there exists a through connection from the outputs (15, 17) of the mixing valve units (2, 3) to the mixed water outlet (18), in a third setting there exists a through connection from the output (17) of the second mixing valve unit (3) to the mixed water outlet (18) and in a fourth setting there is no through connection to the mixed water outlet (18).

5. Mixer tap according to any one of claims 1 to 4, characterized in that the third valve (7; 7a) is a non-return valve (7), a stop valve or a 3 port 3 way valve (7a).

6. Mixer tap according to any one of claims 1 to 5, characterized in that at least one further mixing valve unit (3a) is directly connected in parallel with the second mixing valve unit (3) and the output (17a) of each further mixing valve unit (3a) is connected via its own stop valve (6a) respectively to its own mixed water outlet (18a) of the mixer tap.

7. Mixer tap according to any one of claims 1 to 6, characterized in that the distributing valves and stop valves (5, 6, 7a, 23, 24) comprise ceramic disks, one of which is fixed permanently in position and the other of which, resting against the first, serves as a rotary member, the disks being provided with openings and channels which can be caused to coincide both partially and completely by rotating the rotary member.

8. Mixer tap according to any one of claims 1 to 7, characterized in that the valves (5, 6, 7, 7a, 23, 24) are integrated in a housing (1) of the mixer tap.
